Europäisches Patentamt

European Patent Office

Office européen des brevets

(11) Publication number: **0 056 306**
**B1**

## EUROPEAN PATENT SPECIFICATION

(45) Date of publication of patent specification: **12.09.84**

(51) Int. Cl.³: **F 16 F 15/28,** F 16 D 1/06

(21) Application number: **82300069.0**

(22) Date of filing: **07.01.82**

(54) **Balancing of shafts.**

(30) Priority: **10.01.81 GB 8100739**

(43) Date of publication of application:
**21.07.82 Bulletin 82/29**

(45) Publication of the grant of the patent:
**12.09.84 Bulletin 84/37**

(84) Designated Contracting States:
**AT BE DE FR IT LU NL SE**

(56) References cited:
**GB-A- 295 208**
**GB-A- 705 022**
**GB-A-1 306 938**

(73) Proprietor: **BRD COMPANY LIMITED**
**P.O. Box 2**
**Aldridge Walsall WS9 8DT (GB)**

(72) Inventor: **Fisher, Leslie George**
**74 Clivedon Avenue Perry Barr**
**Birmingham West Midlands (GB)**

(74) Representative: **Dodd, Graham Marshall et al**
**Guest Keen and Nettlefolds plc Group Patents**
**and Licensing Department P.O. Box 55 Ipsley**
**House Ipsley Church Lane**
**Redditch Worcestershire B98 0TL (GB)**

Courier Press, Leamington Spa, England.

## Description

This invention relates to a shaft for torque transmission, comprising a tubular member and an end fitting, e.g. a universal joint part, secured thereto by welding the tubular member and end fitting being made of a relatively lightweight material such as an aluminium alloy.

Unless a shaft is to be used at very low speeds, it must be rotationally balanced. The requirement for balancing is particularly important in the case of a shaft to be used as a propeller shaft of a motor vehicle. In conventional steel shafts balancing is usually performed by the spot welding of appropriate balance weights of sheet steel to the shaft, but this cannot be done with shafts of aluminium alloy because of the inability to weld steel weights thereto. Weights made of the same material as the shaft, which could be welded thereto, would have to be excessively large to achieve the same balancing effect as a smaller more dense weight.

According to the present invention, we provide a shaft for torque transmission, comprising a tubular member and an end fitting having a spigot welded to said tubular member, both said tubular member and end fitting being of a relatively lightweight material, and said spigot of the end fitting or said tubular member carrying an annular member of a relatively more dense material compatible with attachment of balance weights thereto by fusion or capable of balancing by removal of material therefrom.

Preferably the end fitting comprises a yoke member of a Hooke's universal joint, and the annular member is of steel to permit spot welding thereto of steel balance weights.

The end fitting and tubular member may be friction welded together. In this case the annular member may be provided adjacent the end of the spigot of the end fitting which is to be friction welded to the tubular member, and may act as a guide for the flash which forms during the friction welding operation.

The invention will now be described by way of example with reference to the accompanying drawings, of which:

Figure 1 is a part section through one embodiment of shaft according to the invention, and

Figure 2 is a part section through a modified embodiment of shaft.

Referring to the drawings, there is illustrated, in both figures, one end of a shaft comprising a tubular member 10 to which is secured an end fitting in the form of a yoke 11 of a Hooke's universal joint. The yoke 11 has a spigot 12 which abuts the end of the tubular member 10, and a friction welded joint is established between the two components. Both the joint yoke and tubular member are made from an aluminium alloy.

The spigot of the Hooke's joint yoke carries an annular steel sleeve 13. This is a tight interference fit on the spigot, having been pressed on. In service, extremes of temperature may be encountered, and it is important it should not come loose. Balance weights of the type conventional for steel shafts may be spot welded to the steel sleeve, with appropriate mass and disposition to rotationally balance the shaft. As an alternative, the sleeve 13 could be carried by the tubular member 10.

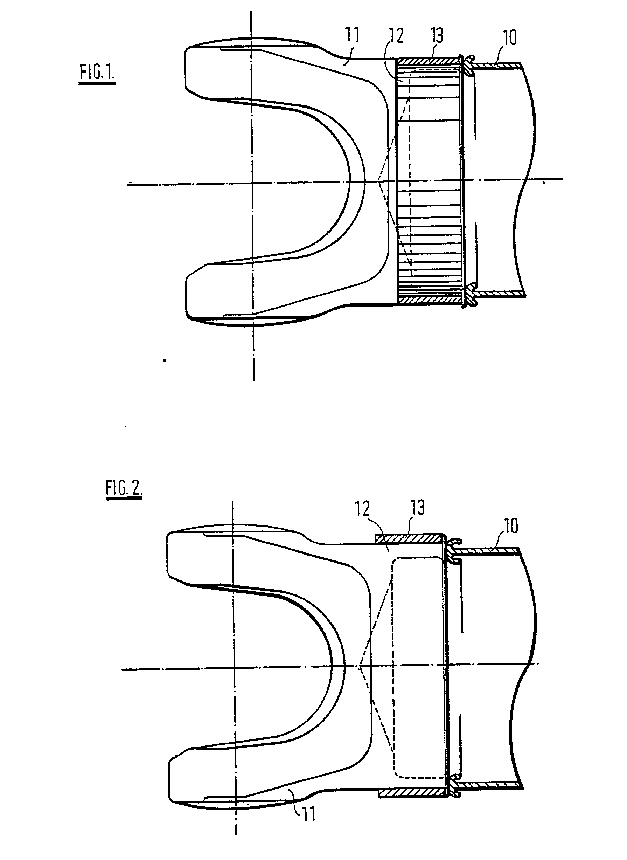

In Figure 1, the annular member 13 abuts a step on the spigot 12, and in Figure 2 there is no such formation to assist axial location of the annular member 13 on the spigot.

It will be noted that the steel annular member lies close to the free end of the spigot which is friction welded to the tubular member. During the friction welding operation, the annular member, which has of course been fitted to the joint yoke previously, acts as a guide to the flash which forms to prevent the flash from folding back sharply on itself. The annular member also resists any tendency of the spigot wall to distort under the loads imposed by friction welding. If the sleeve were carried by the tubular member 10, it would reinforce that member.

As an alternative to the attachment of balance weights to the annular member, it would be possible to remove part of the member, e.g. by an appropriate machining operation, to balance the shaft.

The tubular member 10 may be the shaft itself, or may be provided at the end of a main shaft part of another material. For example, a fibre reinforced resin main shaft part may have light-weight tubular elements provided at its ends only to enable universal joints to be secured thereto by welding.

## Claims

1. A shaft for torque transmission, comprising a tubular member and an end fitting having a spigot welded to said tubular member, both said tubular member and end fitting being of a relatively lightweight material, characterised in that said spigot of the end fitting or said tubular member carries an annular member of a relatively more dense material compatible with attachment of balance weights thereto by fusion or capable of balancing by removal of material therefrom.

2. A shaft according to claim 1 wherein said snd fitting comprises a yoke member of a Hooke's universal joint.

3. A shaft according to claim 1 or claim 2 wherein said annular member is of steel.

4. A shaft according to any one of the preceding claims wherein said end fitting and tubular member are friction welded together.

5. A shaft according to claim 4 wherein said annular member is provided adjacent the end of the spigot portion of the end fitting, and acts as a guide for the flash formed during friction welding.

6. A shaft substantially as hereinbefore described with reference to and as shown in the accompanying drawings.

## Patentansprüche

1. Welle zur Drehmomentübertragung, bestehend aus einem rohrförmigen Teil und einem Anschlußstück, das mit einem an das rohrförmige Teil geschweißten Zapfen versehen ist, wobei sowohl das rohrförmige Teil wie das Anschlußstücke aus einem relativ leichten Material bestehen, dadurch gekennzeichnet, daß der Zapfen des Anschlußstückes oder das rohrförmige Teil mit einem ringförmigen Teil aus einem relativ dichteren Werkstoff versehen ist, an das sich durch einen Schmelzvorgang Auswuchtgewichte anbringen lassen oder das durch Materialentfernung in der Lage ist, einen Massenausgleich zu schaffen.

2. Welle nach Anspruch 1, wobei das Anschlußstück aus einem Gabelkörper eines Kreuzgelenks besteht.

3. Welle nach Anspruch 1 oder 2, wobei das ringförmige Teil aus Stahl besteht.

4. Welle nach einem der vorherigen Ansprüche, wobei das Anschlußstück und das rohrförmige Teil durch Reibschweißen miteinander verbunden sind.

5. Welle nach Anspruch 4, wobei das ringförmige Teil am Ende des Zapfenabschnittes des Anschlußstückes angeordnet ist und als Führung für den beim Reibschweißen sich bildenden Grat dient.

## Revendications

1. Arbre destiné à la transmission de couples, comprenant un élément tubulaire et un embout qui possède une tubulure par laquelle l'embout est soudé à l'élément tubulaire, l'élément tubulaire et l'embout étant tous deux en un matériau relativement léger, caractérisé en ce que la tubulure de l'embout ou l'élément tubulaire porte une pièce annulaire d'un matériau de masse volumique plus élevée qui permet de fixer par fusion des poids d'équilibrage sur la pièce annulaire ou qui permet l'équilibrage par enlèvement de matériau de cette pièce.

2. Arbre selon la revendication 1, dont l'embout est une fourche d'un joint universel à croisillon.

3. Arbre selon la revendication 1 ou 2, dont la pièce annulaire est en acier.

4. Arbre selon l'une quelconque des revendications précédentes, dont l'embout et l'élément tubulaire sont assemblés par soudage par friction.

5. Arbre selon la revendication 4, où la pièce annulaire est disposée près de l'extrémité de la partie formant tubulure de l'embout et agit comme guide pour la matière refoulée pendant le soudage par friction.

FIG.1.

FIG. 2.